# EUROPÄISCHE PATENTSCHRIFT

(11) **EP 1 535 153 B1**
(45) Veröffentlichungstag und Bekanntmachung des Hinweises auf die Patenterteilung: **04.06.2014**
(21) Anmeldenummer: 03783934.7
(22) Anmeldetag: 29.07.2003
(51) Int. Cl.: G06F 9/48

(54) **PRIORISIERUNGSVERFAHREN VON INFORMATIONSGEBERN, INSBESONDERE ZUR KOORDINIERTEN ANTRIEBSSTRANGSTEUERUNG EINES KRAFTFAHRZEUGES**
PRIORITIZATION METHOD OF INFORMATION TRANSMITTERS, PARTICULARLY FOR EXECUTING THE COORDINATED DRIVE TRAIN CONTROL OF A MOTOR VEHICLE
PROCEDE DE PRIORISATION DE TRANSMETTEURS D'INFORMATIONS, NOTAMMENT POUR LA COMMANDE COORDONNEE DE LA CHAINE CINEMATIQUE D'UN VEHICULE

(30) Priorität: 29.07.2002 DE 10234636; 29.07.2003 DE 10334535
(43) Veröffentlichungstag der Anmeldung: 01.06.2005
(73) Patentinhaber: ROBERT BOSCH GMBH, 70442 Stuttgart (DE)
(72) Erfinder: BASSIERE, Dirk, 71679 Asperg (DE); BICKENDORF, Frank, 71254 Ditzingen (DE); FREI, Rasmus, 74321 Bietigheim-Bissingen (DE)
(86) Internationale Anmeldenummer: PCT/DE2003/002540
(87) Internationale Veröffentlichungsnummer: WO 2004/014699

(56) Entgegenhaltungen:
- WO-A-01/57650
- DE-A- 10 044 319
- FR-A- 2 714 642
- US-A- 4 954 948
- US-A- 5 938 708

## Beschreibung

Die Erfindung betrifft ein Priorisierungsverfahren von Informationsgebern, insbesondere zur koordinierten Antriebsstrangsteuerung eines Kraftfahrzeuges, sowie ein entsprechendes Steuerungssystem und ein Computerprogramm(produkt) zur Durchführung des Verfahrens.

In der Automobiltechnik wurde ursprünglich die Elektronik nur in Form einzelner, elektronifizierter Komponenten eingesetzt, wobei diese Komponenten isoliert und unabhängig voneinander agierten. Daran anschließend wurden diese Komponenten zunehmend zu Systemen integriert. Beispiele hierfür sind elektronische Motorsteuerungssysteme, Bremsregelungssysteme oder Fahrerinformationssysteme. Derzeit ist ein Trend hin zur Vernetzung aller Fahrzeugsysteme untereinander und zunehmend auch mit der Fahrzeugumwelt zu beobachten.

Dieses erkennbare Zusammenwachsen der Systeme bringt nun erhebliche technische und organisatorische Herausforderungen mit sich:
- neue Fahrzeugfunktionen sind häufig nur noch im Verbund unterschiedlicher Teilsysteme realisierbar und effektiv nutzbar,
- damit wird eine funktionale Integration von Teilsystemen auch unterschiedlicher Zulieferer erforderlich,
- die Wertigkeit und der Charakter von Fahrzeugen werden zunehmend durch komplexe Softwarefunktionen bestimmt,
- die Beherrschung der wachsenden Systemkomplexität wird für Fahrzeughersteller und Zulieferer wettbewerbsentscheidend hinsichtlich Geschwindigkeit, Kosten und Qualität.

### Stand der Technik

Aus der DE 198 38 333 A1 der Anmelderin ist ein Computersystem mit wenigstens einem Prozessor und wenigstens einem Speicher zur Steuerung einer Antriebseinheit bekannt. Ziel ist - es eine Steuerungsstruktur des Gesamtfahrzeuges anzugeben, mit deren Hilfe der Triebstrang und speziell die Antriebseinheit mit außerhalb liegenden Komponenten verknüpft werden können. Triebstrang und Antriebseinheit sind in einem Motormanagement in ein Gesamtfahrzeugkonzept eingebunden. Das Fahrzeug wird als Gesamtsystem, bestehend aus Funktionseinheiten, als eine erste Komponente aufgefasst. Das Gesamtsystem, bestehend aus Funktionseinheiten, wird in verschiedene, vorgebbare Komponenten, z. B. Fahrzeugbewegung und Antriebskoordinator, aufgeteilt. Die Antriebseinheit wird dabei als eine Komponente vorgegeben. Die Antriebseinheit wird abhängig von den vorgegebenen Komponenten und/oder den an den Schnittstellen zwischen den Komponenten ausgetauschten Daten gesteuert. Durch diesen Systemverbund können einzelne Elemente oder Funktionseinheiten nicht mehr getrennt betrachtet werden, sondern eingebunden in das Gesamtkonzept. Bei einer Antriebs- bzw. Motorsteuerung beispielsweise müssen nicht nur Momenten- bzw. Leistungsanforderungen oder Drehzahlvorgaben der Fahrzeugbewegung, wie Lenkung, Bremse oder Fahrdynamikregelung berücksichtigt werden, sondern auch die Leistungs- bzw. Momentenforderungen und/oder Drehzahlinformationen aller Nebenaggregate und Stellglieder. Darüber hinaus ergibt sich aber auch die Möglichkeit, durch den Zugriff auf Daten und Informationen anderer Funktionseinheiten und Systeme, wie z. B. Umweltgrößen, Fahrzustandsgrößen, Fahrzeuggrößen und Benutzergrößen, eine an die jeweiligen Gegebenheiten angepasste Antriebssteuerung durchzuführen. Nachteilig ist hierbei jedoch, dass es nicht möglich ist einzelne Funktionseinheiten durch ein anonymes Verfahren auszuwählen.

Aus der EP 0 883 510 B1 ist eine Antriebsstrangsteuerung für ein Kraftfahrzeug bekannt, die eine Radmomentenberechnungsschaltung enthält, durch die die Stellung des Fahrpedals als ein vom Fahrer gewünschtes Radmoment oder Getriebeausgangsmoment interpretiert und zum Berechnen von Sollwerten für das von dem Antriebsstrang abzugebende Drehmoment verwendet wird, und die eine Steuerschaltung aufweist, die mit einem Fuzzy-System versehen ist, in dem das gewünschte Radmoment zusammen mit Betriebsparametern des Kraftfahrzeugs und Umweltparametern ausgewertet wird, durch die anhand einer zentralen Fahrstrategie-Auswahlschaltung die Betriebsweise des Antriebsstrangs bei beliebiger Fahrweise des Fahrers und Fahrsituation des Kraftfahrzeugs an vorgegebene Kriterien angepasst wird, und die mit einer Motorleistungsstelleinheit verbunden ist, an die sie ein Ausgangssignal abgibt, durch welches das von den Rädern auf die Fahrbahn abzugebende Soll-Raddrehmoment festgelegt wird. Es wird eine Strategie für die Motorsteuerung, die Motorleistungsstelleinheit und die Getriebesteuerung zentral derart festgelegt, dass der Ausstoß von Schadstoffen minimiert wird. Die zentrale Strategie kann auch einen fahrleistungsorientierten Modus des Kraftfahrzeuges zum Ziel haben. Alle dezentralen Funktionseinheiten werden bei dieser Strategie so eingestellt, dass eine bestmögliche Beschleunigung und ein schnelles Ansprechen des Antriebes auf den Fahrerwunsch zur Verfügung stehen. Notwendig ist ein solcher Modus bei einer sportlichen Fahrweise und bei Bergauffahrt. Die Steuerung erfolgt über eine Steuerschaltung, wobei der Datenaustausch über eine schnelle serielle Buskommunikation, z. B. einen CAN-Bus, ausgeführt wird.

Nachteilig ist hierbei, dass sämtliche Komponenten an die zentrale Steuerschaltung angepasst sind, so dass insbesondere ein anonymes Verfahren zur Auswahl von Komponenten nicht zur Verfügung steht.

In Kraftfahrzeugen werden für verschiedene Komponenten im Triebstrang, wie Motor und Getriebe, Schnittstellen zur Kommunikation vereinbart, über die Anforderungen übermittelt werden können, damit sie von der empfangenden Komponente ausgeführt werden (im Kraftfahrzeugbereich verbreitete technische Schnittstelle zur Steuergerätevernetzung ist beispielsweise der CAN-Bus).

Neben dem Fahrpedal und dem Bremspedal gibt es viele weitere Anforderer, die Vorgaben an den Antriebsstrang machen können. Typische Beispiele hierfür sind Komfortsysteme wie der Fahrgeschwindigkeitsregler oder Sicherheitssysteme wie ASR und ESP. Dabei wird ein großer Teil an Entwicklung und Rechenkapazität nachteiligerweise dafür aufgewendet, entsprechend der aktuellen Fahrsituation zu entscheiden, wann welches System tatsächlich aktiv den Arbeitspunkt des Triebstranges vorgeben oder beeinflussen darf.

Es ist bekannt, aufsetzend auf einem Echtzeit-Betriebssystem als Standard-Betriebssystem, z. B. ERCOS oder OSEK bzw. OSEK/VDX, zur Steuerung von Betriebsabläufen eines Fahrzeugs eingebettete Softwarelösungen einzusetzen. Dabei werden applikationsspezifische Funktionen, Systemgrundfunktionen, Kernfunktionen sowie die entsprechende Treibersoftware, also die spezifischen Basisfunktionen einerseits mit den unterschiedlichen Betriebsfunktionen und Teilbetriebsfunktionalitäten andererseits, welche das eigentliche Betriebsverhalten des Fahrzeugs bestimmen, verwoben. Notwendige bzw. gewünschte Veränderung von Funktionen oder das nachträgliche Einfügen von Funktionen lassen bei solchermaßen verwobenen Softwarelösungen sehr komplexe Systemausbildungen, insbesondere der Schnittstellen, entstehen.

Aus der DE 100 44 319 A1 der Anmelderin ist bereits die abstrakte Idee bekannt durch die klare Trennung von Betriebs- und Basisfunktionen und die Einführung einer Systemschicht bzw. Zwischenschicht mit offener Schnittstellenfunktion eine Optimierung zu erzielen. Dabei wird von einem elektronischen System für ein Fahrzeug bzw. von einer Systemschicht des elektronischen Systems ausgegangen, wobei das elektronische System erste Komponenten zur Durchführung von Steuerungsaufgaben bei Betriebsabläufen des Fahrzeuges und zweite Komponenten, welche ein Zusammenwirken der ersten Komponenten zur Durchführung der Steuerungsaufgaben koordinieren, umfasst. Die ersten Komponenten führen dabei die Steuerungsaufgaben durch Verwendung von Betriebsfunktionen und Basisfunktionen aus. Vorteilhafterweise wird das System derart aufgebaut, dass Basisfunktionen und Betriebsfunktionen bzw. Teilbetriebsfunktionalitäten (als Betriebsteilmodule oder Plug-Ins bezeichnet) klar voneinander getrennt werden, wobei die Basisfunktionen in einer Basisschicht zusammengefasst sind. Zweckmäßigerweise wird dann die Systemschicht auf der Basisschicht, welche die Basisfunktionen enthält, aufgesetzt. Die Systemschicht bzw. Zwischenschicht enthält dabei wenigstens zwei der zweiten Komponenten, welche das Zusammenwirken der Steuerungskomponenten koordinieren. Dabei ist in bzw. bei der Systemschicht wenigstens eine offene Schnittstelle zu den Betriebsfunktionen vorgesehen, wodurch die Systemschicht die Basisfunktionen mit beliebigen Betriebsfunktionen derart verbindet, dass die Betriebsfunktionen modular eingebunden und/oder verwendet bzw. modular an das elektronische System angebunden werden können. Damit werden die Betriebsfunktionen bzw. die Betriebsteilmodule modular einbindbar in das elektronische System, wieder verwendbar und jederzeit austauschbar bzw. veränderbar. Durch die Systemschicht wird eine definierte Schnittstelle festgelegt, um im Rahmen der Steuergeräte-Software für beliebige Betriebsfunktionen eine Variantenbildung sowie Erweiterungen bzw. Veränderungen der Funktionalität, insbesondere durch Betriebsteilmodule, so genannte Plug-Ins, zu ermöglichen. In einer Ausgestaltung kann damit ein System, welches sich bereits in Serie bzw. im Einsatz oder Betrieb befindet, jederzeit weiterentwickelt, verändert und/oder durch Hinzufügung neuer Betriebsfunktionen erweitert werden. Damit können sinnvollerweise Steuerungsaufgaben bzw. spezifische Leistungsmerkmale eines elektronischen Systems sehr flexibel und individuell entworfen, entwickelt bzw. implementiert werden. Außerdem können zusätzlich die Übewachungsfunktionen bezüglich der Betriebsfunktionen und/oder der Betriebsteilmodule in der Systemschicht eingebunden werden. Durch diese Modularisierung der Software- und Überwachungsfunktionalitäten ergibt sich die Möglichkeit, beispielsweise von Dritten erstellte Software mit geringem Aufwand in das elektronisch System einzubinden. Dies erlaubt auch, spezifische Varianten ausschließlich innerhalb der Betriebsfunktionen bzw. der Betriebsteilmodule darzustellen, während die Systemschicht anwendungsunabhängig gestaltet werden kann. Nachteilig ist hierbei, dass lediglich formale Vorgaben gemacht werden und konkrete, inhaltliche Vorgehensweisen nicht angegeben sind, insbesondere kein anonymes Verfahren zur Auswahl von Betriebsteilmodulen oder Plug-Ins.

### Vorteil der Erfindung

Ausgehend vom geschilderten Stand der Technik soll ein anonymes Verfahren zur Auswahl von Informationsgebern, insbesondere zur koordinierten Antriebsstrangsteuerung von Kraftfahrzeugen, geschaffen werden, welches z. B. eine einfache Austauschbarkeit von Plug-Ins in Computersystemen ermöglicht.

Die Erfindung schlägt ein Priorisierungsverfahren mit den Merkmalen der Patentansprüche 1 und 5 vor. Vorteilhafte Ausgestaltungen der Erfindung sind Gegenstand der Unteransprüche und der nachfolgenden Beschreibung.

Erfindungsgemäß wird ein anonymes Priorisierungsverfahren von Informationsgebern, z. B. Plug-Ins, zur Verfügung gestellt. Um in Computersystemen auf einfache Weise eine gewünschte einfache Austauschbarkeit von Funktionen in Komponenten oder Plug-Ins erreichen zu können, ist es erforderlich, dass die übrigen Komponenten einer Softwarearchitektur des Computersystems unabhängig von der Anzahl und der Funktionsweise der Plug-Ins auf die Plug-Ins zugreifen können. Nur so können Plug-Ins beliebig ausgetauscht werden. Ein erfindungsgemäßes Priorisierungsverfahren von Informationsgebern, z. B. Plug-Ins, zur Steuerung, insbesondere zur koordinierten Antriebsstrangsteuerung für ein Kraftfahrzeug, setzt insbesondere diese Zielsetzung um. In den Plug-Ins bzw. Anforderern ist in Abhängigkeit von der aktuellen Fahrsituation ein Anforderungswunsch enthalten, wobei jedoch nicht bei jeder bestimmten Fahrsituation im entsprechenden Plug-In oder Anforderer auch ein Anforderungswunsch enthalten sein muss. Die Anforderer oder Plug-Ins werden nach dem Grad ihrer Priorität aufsteigend oder abfallend sortiert, wobei diese Priorität in Abhängigkeit von globalen Optimierungskriterien bestimmt wird, beispielsweise einer Ökoabstimmung, Sportabstimmung oder einer Wintererkennung. In dieser entsprechend sortierten Liste mit Anforderern oder Plug-Ins werden die einzelnen Anforderer sequentiell beginnend mit dem Anforderer mit der höchsten Priorität abgearbeitet, d. h. es wird abgefragt, ob ein Anforderungswunsch im Anforderer bzw. im Plug-In vorliegt. Sobald ein Anforderer einen Anforderungswunsch enthält, wird das Abarbeiten abgebrochen, und der in diesem Anforderer enthaltene Anforderungswunsch ausgewählt, vorzugsweise gespeichert und weitergeleitet. Jeder Anforderer in den sortierten Listen kann durch eine Identität (ID), vorzugsweise als Zahl, und der Position in der Liste eindeutig gekennzeichnet sein.

In einem weiteren erfindungsgemäßen Priorisierungsverfahren von Informationsgebern, z. B. Plug-Ins, werden in einer Liste mit Anforderern bzw. Plug-Ins alle Anforderer in beliebiger Reihenfolge abgearbeitet, wobei diese Liste nicht nach Prioritäten sortiert ist und das Abarbeiten hier beispielsweise auch sequentiell erfolgen kann. Daran anschließend wird der Anforderungswunsch in der Liste der Anforderer mit dem maximalen (minimalen) Anforderungswunsch oder der durchschnittliche Anforderungswunsch der Anforderer ermittelt. Dieser maximale (minimale) Anforderungswunsch wird anschließend gespeichert und weitergeleitet.

Zur Ermittlung des maximalen (minimalen) Anforderungswunsches wird im Allgemeinen das nachfolgend beschriebene Schema verwendet. Die in der nicht sortierten Liste enthaltenen Anforderer bzw. Plug-Ins werden in beliebiger Reihenfolge abgefragt. Der erste abgefragte Anforderungswunsch, der von einem einen Anforderungswunsch enthaltenden Plug-In stammt, wird zunächst zwischengespeichert. Jeder weitere abgefragte Anforderungswunsch wird mit dem zwischengespeicherten Anforderungswunsch verglichen, ob er größer (kleiner) ist als der zwischengespeicherte Anforderungswunsch. Falls ein abgefragter Anforderungswunsch größer (kleiner) ist als der zwischengespeicherte Anforderungswunsch, wird dieser abgefragte Anforderungswunsch zwischengespeichert und der vorhergehende Anforderungswunsch gelöscht, d. h. der bisher gespeicherte Wert wird vom aktuell abgefragten Wert überschrieben, wobei andernfalls keine Speicherung erfolgt, d. h. der bisher zwischengespeicherte Anforderungswunsch gespeichert bleibt. Nach der Abfrage aller Anforderer ist der maximale (minimale) Anforderungswunsch zwischengespeichert und kann weitergeleitet werden.

Hierbei kann in einer Variante bei bestimmten Anforderern, z. B. Anforderem, die Motor und Bremse ansteuern, mit einem bestimmten Anforderungswunsch, z. B. einem Bremseingriff, der minimale (maximale) Anforderungswunsch, z. B. der minimale Vortriebswunsch, ausgewählt werden und andernfalls der maximale (minimale) Anforderungswunsch.

In einer weiteren Variante des eben beschriebenen Priorisierungsverfahrens nach maximaler (minimaler) Auswahl ist es auch möglich, dass einzeln Anforderer bzw. Plug-Ins bewirken, dass bestimmte andere Anforderer bei der Ermittlung des maximalen (minimalen) Anforderungswunsches nicht berücksichtigt werden. Beispielsweise kann ein Anforderer-Fahrpedal bewirken, dass alle anderen Anforderer, die eine Bremsung/Verzögerung bewirken, nicht berücksichtigt werden.

Jeder Anforderer bzw. ein Plug-In ist durch eine Identität (ID), vorzugsweise eine Zahl, für das Abarbeiten eindeutig gekennzeichnet. Das bedeutet, dass die Position in der Liste nicht von Bedeutung ist. Auch bei diesem Priorisierungsverfahren gibt es verschiedene Listen zum Anpassen an globale Optimierungskriterien, z. B. Ökoabstimmung, Sportabstimmung oder Wintererkennung, wobei jedoch hier nur relevant ist, welche Anforderer in der Liste stehen.

Beide eben beschriebenen Priorisierungsverfahren können auch miteinander kombiniert werden, wobei vorzugsweise das erstbeschriebene Priorisierungsverfahren zuerst eingesetzt wird und, falls dieses kein Ergebnis liefert, das zweite Priorisierungsverfahren angewendet wird. Das erste Priorisierungsverfahren liefert keinen Anforderungswunsch, falls in der entsprechenden Liste in keinem der Anforderer bzw. Plug-Ins ein Anforderungswunsch enthalten ist.

Das erfindungsgemäße Priorisierungsverfahren kann vorzugsweise mit einem Computersystem mit wenigstens einem Prozessor/Speicher und einer entsprechenden Softwarearchitektur durchgeführt werden. Unter dem abstrakten Begriff der Architektur wird sowohl die Systematik der Strukturierung eines komplexen Systemverbundes als auch deren konkrete Umsetzung verstanden. Diese kann aus den nachfolgenden Elementen bzw. Komponenten bestehen: ein "Operation System and Specific Services" mit Betriebssystem und spezifischen Diensten als Basis für alle anderen Elemente und Anwendungen, einer "Basic Functionality" zur Umsetzung universeller Anforderungen, wobei Grundfunktionen eines Steuergerätes, beispielsweise der Ansteuerung von Aktoren eines Verbrennungsmotors, in der Basic Functionality bewerkstelligt werden, einem "Layer" zur Koordinierung von Aufgaben für Basisfunktionalitäten der Basic Functionality und zum Einbinden von Plug-Ins und wenigstens einem Plug-In zur Umsetzung von konkreten Aufgaben bzw. Funktionen, die über die Basisfunktionalität der Basic Functionality hinausgehen und vom Layer koordiniert werden.

Mit dem erfindungsgemäßen Priorisierungsverfahren (ausgeführt vom Computersystem) können vorteilhafterweise die Plug-Ins modulartig ausgetauscht werden, wodurch das Priorisierungsverfahren flexibel an unterschiedliche Hersteller- und Kundenwünsche anpassbar ist und Funktionen einfach implementierbar sind. Dadurch kann das Priorisierungsverfahren durchgeführt mit dem Computersystem auf einfache und vorteilhafte Weise auf verschiedene Fahrzeugtypen oder unterschiedliche Motoren übertragen werden, ohne diese selbst verändern zu müssen.

Des Weiteren können durch diesen modulhaften Aufbau auch neue Teilfunktionen einfach in das Priorisierungsverfahren durchgeführt mit dem Computersystem eingefügt werden. Dadurch ist beispielsweise auch ein Softwaresharing möglich.

Außerdem sind vorteilhafterweise in der Softwarearchitektur auch offene Schnittstellen (open interfaces), auf die von außen zugegriffen werden kann, und geschlossene Schnittstellen (encapsulated interfaces), die nach außen nicht freigegeben sind, integriert.

Als Plug-Ins kommen zur Umsetzung von beispielsweise verschiedenen charakteristischen Eigenschaften von Fahrzeugen beispielsweise ein ACC Request (Adaptive Cruise Control Request) zur Anpassung der Geschwindigkeit oder des Abstandes des Fahrzeuges, ein Drivers Demand (comfort bzw. sport) zur Auslegung und Interpretation des Fahrpedals, Driveability zur Festlegung eines globalen Optimierungskriteriums, z. B. Fahrkomfort oder Sport, sowie Shift Strategy (comfort bzw. sport), die aus dem Sollwert für das Drehmoment am Getriebeausgang und der Fahrzeuggeschwindigkeit den Sollwert für die Getriebeübersetzung und das Motormoment bestimmt.

Im Layer sind beispielsweise die Koordinatoren Vehicle Coordinator, Vehicle Motion Coordinator und Powertrain Coordinator integriert. Jeder Koordinator sollte mit den Plug-Ins kommunizieren können, d. h. über Schnittstellen mit den Plug-Ins verbunden sein. Des Weiteren sollte der Layer über Schnittstellen zur Kommunikation mit der Basic Functionality verbunden sein, welche Basisfunktionen enthält, die wie Sensoren oder Aktoren agieren, wobei z. B. das engine management als Momentensteller wirkt, das transmission management ein Übersetzungsverhältnis umsetzt, das brake management eine geforderte negative Sollbeschleunigung einstellt und ein Adaptive Cruise Control (ACC) System die Geschwindigkeit an eine Fahrervorgabe anpasst.

Anforderungen verschiedener Systeme werden in einheitlicher Art auf Basis von Systemführungsgrößen, z. B. Getriebeausgangsmoment, zentral eingebracht. Das Priorisierungsverfahren durchgeführt mit dem Computersystem erlaubt es damit durch den einfachen Austausch oder das Hinzufügen von Funktionen, die in Plug-Ins enthalten sind, ein Kraftfahrzeug flexibel an verschiedene Anforderungen anpassen zu können. Dadurch können die Automobilhersteller eine Markendifferenzierung auf Softwarebasis einführen, weil allein aufgrund unterschiedlicher Softwarekomponenten Fahrzeuge mit unterschiedlichen Eigenschaften zur Verfügung stehen. Des Weiteren können auch die Kosten in erheblichem Maße reduziert werden, weil zum Anpassen an neue Funktionen nicht das gesamte Priorisierungsverfahren durchgeführt mit dem Computersystem ausgetauscht werden muss, sondern lediglich durch den kostengünstigen Austausch einzelner Plug-Ins die Eigenschaften verändert werden können.

Zur Erfindung gehörig ist weiterhin ein Steuerungssystem für ein Fahrzeug, insbesondere Kraftfahrzeug, bei dem das Steuerungssystem derart ausgelegt ist, um ein erfindungsgemäßes Priorisierungsverfahren auszuführen. Insbesondere lässt sich mit einem solchen Steuerungssystem eine koordinierte Antriebsstrangsteuerung eines Kraftfahrzeuges realisieren.

Teil der Erfindung sind auch Computerprogramme mit Programmcodemitteln oder Computerprogrammprodukte mit Programmcodemitteln, die auf einem lesbaren Datenträger gespeichert sind, um eines der erfindungsgemäßen Verfahren durchzuführen, sofern das Computerprogramm auf einem Computer oder einer entsprechenden Recheneinheit ausgeführt wird.

### Zeichnungen

Nachfolgend wird die Erfindung beispielhaft beschrieben. Dabei zeigen:
- Fig. 1:: ein Schema eines "intelligenten" Fahrzeuges der Zukunft,
- Fig. 2:: einen schematisierten Entwicklungsprozess eines modulartigen Systemaufbaus,
- Fig. 3:: eine an der Fahrzeugtopologie ausgerichtete strukturierte Funktionsarchitektur,
- Fig. 4:: eine schematisierte Übersicht auf eine Softwarearchitektur des modulartigen Systemaufbaus,
- Fig. 5:: eine schematisierte beispielhafte Konkretisierungsform der Systemarchitektur des modulartigen Systemaufbaus,
- Fig. 6:: eine schematisierte Ansicht der symbolischen Ausstattung eines Kraftfahrzeuges als Versuchsträger,
- Fig. 7:: eine Softwarearchitektur mit Plug-In-Design in einer Schichtenansicht,
- Fig. 8:: einen erfindungsgemäßen schematisierten inneren Aufbau eines Vehicle Motion Coordinators aus Fig. 7,
- Fig. 9:: eine grafische Darstellung einer erfindungsgemäßen linearen Priorisierung (erste Stufe) und einer erfindungsgemäßen Maximal-Auswahl (zweite Stufe),
- Fig. 10:: ein erfindungsgemäßes Ablaufschema eines Priorisierungsverfahrens als Kombination aus linearer Priorisierung (erste Stufe) und Maximal-Auswahl (zweite Stufe),

### Bevorzugte Ausführungsform

Ein modulartiger Systemaufbau (auch unter Cartronic des Unternehmens Bosch bekannt) für alle Steuerungs- und Regelungsaufgaben im Fahrzeug ist eine offene Systemarchitektur. Das erfindungsgemäße Priorisierungsverfahren kann vorzugsweise in einem Computersystem mit diesem modulartigen Systemaufbau eingesetzt werden. Aus diesem Grund wird nachfolgend dieser modulartige Systemaufbau bzw. diese Softwarearchitektur ausführlich beschrieben.

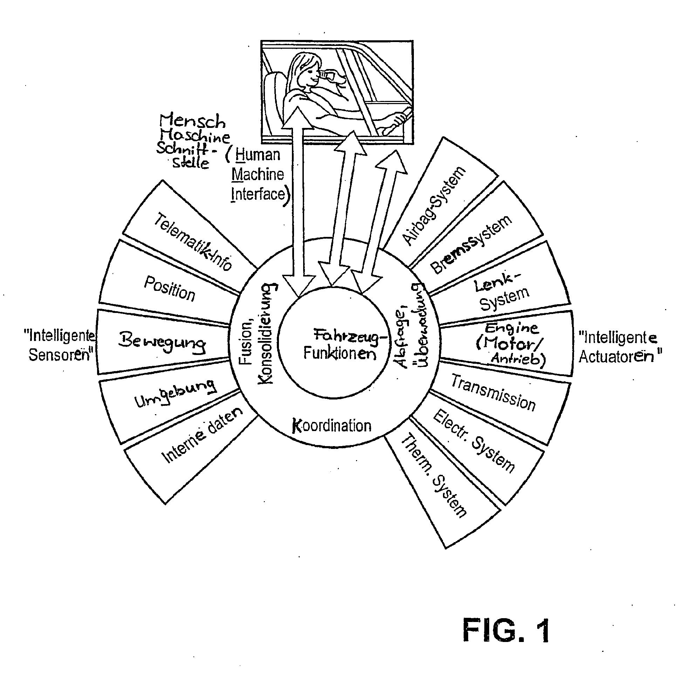

Die dem modularen Systemaufbau zugrunde liegende Vision gliedert das intelligente Fahrzeug der Zukunft in drei wesentliche Elemente, siehe Fig. 1:
- Intelligente Sensoren erfassen alle für den Fahrzeugbetrieb wichtigen Informationen. Hierzu gehören z. B. Sensoren zur Erfassung von Bewegungsdaten wie Geschwindigkeit, Beschleunigung und Drehrate, Sensoren für fahrzeuginterne Größen wie Temperaturen und Drücke und zukünftig auch vermehrt Sensoren zur Erfassung des Fahrzeugumfelds (z. B. Ultraschall, Radar, Video).
- Intelligente Aktoren setzen die erforderlichen Stellbefehle sicher und zuverlässig um. Intelligente, elektronisch gesteuerte Aktoren sind z. B. der Antriebsstrang, bestehend aus Verbrennungsmotor und Getriebe zur Erzeugung des Vortriebsmoments, elektronisch geregelte Bremssysteme zur definierten Verzögerung und Stabilisierung des Fahrzeugs und elektronisch geregelte Lenksysteme für eine sichere und feinfühlige Spurführung. Diese Eingriffe werden künftig vermehrt "by wire" elektronische gesteuert und überwacht erfolgen.
- Eine Mensch-Maschine-Schnittstelle (Human-Machine-Interface, HMI) gibt dem Fahrer die für ihn in der jeweiligen Fahrsituation relevanten Informationen und erlaubt die sichere und komfortable Bedienung des Fahrzeugs über die Bedienelemente des Cockpits.

Die heutigen Fahrzeuge sind in der Regel durch "gewachsene" Elektronik-Strukturen mit einer Vielzahl isolierter und autarker Einzelfunktionen und Steuergeräte gekennzeichnet. Die Entwicklung ist damit meist auf eine Optimierung der isolierten Einzelfunktionen und Subsysteme begrenzt, die Optimierung des Gesamtsystems gestaltet sich schwierig.

Zur Realisierung der Vision vernetzter Systeme im Fahrzeug wird daher eine durchgängige, konsistente, modulare und offene Systemarchitektur erforderlich. Ziel der Systemarchitektur ist die nahtlose Integration aller Teilsysteme zur effizienteren Darstellung übergeordneter Fahrzeugfunktionen, welche ein Zusammenwirken mehrerer Teilsysteme erforderlich machen. Weitere Ziele sind Flexibilität hinsichtlich unterschiedlicher Fahrzeug- und Steuergerätekonfigurationen, einfachere Implementierung kundenspezifischer Funktionen, sowie hohe Funktionssicherheit und Wiederverwendbarkeit von entwickelten Softwarekomponenten.

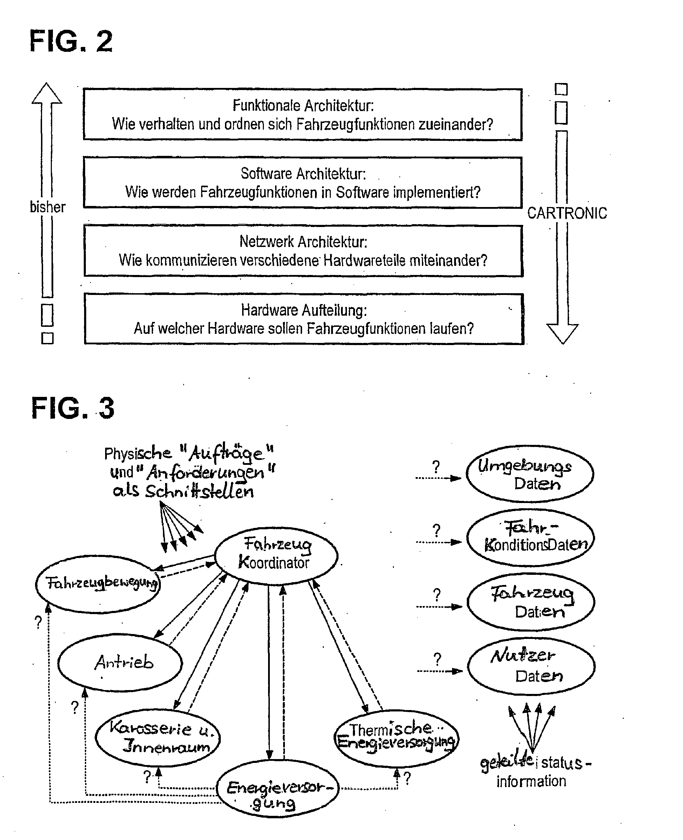

Unter dem abstrakten Begriff "Architektur" soll im Folgenden sowohl die Systematik der Strukturierung des komplexen Systemverbundes als auch deren konkrete Umsetzung verstanden werden. Zur Beschreibung der "Architektur" lassen sich unterschiedliche "Sichten" unterscheiden, die jeweils durch eigene Beschreibungen (im Sinne unterschiedlich abstrakter bis konkreter Modelle) abgebildet werden, welche in den einzelnen Stufen eines Entwicklungsprozesses erzeugt und umgesetzt werden, siehe Fig. 2.

Grundlage der Systemarchitektur des modulartigen Systemaufbaus ist eine an der Fahrzeugtopologie ausgerichtete, hierarchisch klar strukturierte Funktionsarchitektur, siehe Fig. 3. Die Funktionsarchitektur beschreibt Ordnung und Zusammenhang von logisch-modularen Funktionskomponenten: ihren Aufgaben, ihren Schnittstellen, sowie ihren Wechselwirkungen untereinander. Wesentliche Elemente der Funktionsarchitektur sind Domänen, (Sub-)Systeme, funktionale Komponenten und Kommunikationsbeziehungen. Das resultierende abstrakte Modell ist noch unabhängig von einer Implementierung mit einer speziellen Hardwaretopologie.

Die Funktionsarchitektur unterteilt das Fahrzeug in unterschiedliche "Domänen": Fahrzeugbewegung (Powertrain), Antrieb (Vehicle Motion), Karosserie und Innenraum (Body and Interior), elektrische Energieversorgung (Electrical Supply System), thermische Energieversorgung (Thermal Supply System) usw. Innerhalb jeder Domäne werden unterschiedliche Subsysteme identifiziert, die aus "funktionalen Komponenten" bestehen, welche über Kommunikationsbeziehungen miteinander in Wechselwirkungen stehen. Der Begriff "Komponente" meint dabei nicht zwangsläufig die physikalische Einheit im Sinne eines Bauteils, sondern eine Funktionseinheit, die sich ggf. als Subsystem in weitere funktionale Unterkomponenten zerlegen lässt.

Jedes der Subsysteme koordiniert seine Unterkomponenten selbst, die Koordination zwischen Teilsystemen übernehmen spezielle Funktionskomponenten, die als Koordinatoren bezeichnet werden.

Bei den Kommunikationsbeziehungen werden die vier Grundtypen Aufträge, Anforderungen, Rückmeldungen, und Abfragen unterschieden. Eine Anforderung ist der Wunsch zur Ausführung einer Aufgabe, während ein Auftrag mit der Pflicht zur Ausführung verbunden ist. Während ggf. mehrere unterschiedliche funktionale Komponenten ähnliche und auch konfliktäre Anforderungen stellen können (beispielsweise unterschiedliche Verbraucher ein Antriebsmoment eines Motors), erfolgt die Auftragserteilung durch genau einen Auftraggeber (z. B. einen Antriebsstrangkoordinator) an genau einen Auftragnehmer (z. B. den Verbrennungsmotor). Der Auftragnehmer gibt dem Auftraggeber gegebenenfalls eine Rückmeldung über die Ausführung.

Die Funktionsarchitektur kann grafisch oder auch durch UML-Modelle abgebildet werden. Unabhängig von der gewählten Beschreibungsform liefern die zugrunde liegenden Strukturierungsregeln insbesondere in der Phase der Systemanalyse eine konsistente Methode zur Beherrschung der Komplexität, und erlauben die systematische Definition funktionaler Schnittstellen.

Der nächste Schritt im Entwicklungsprozess besteht in der Umsetzung der Funktionsarchitektur in eine geeignete Softwarearchitektur. Die Softwarearchitektur beschreibt die Strukturen der Software des Systems, sie besteht aus Softwarekomponenten, die in sich in weitere Software-Unterkomponenten unterteilt werden können. Der Funktionsumfang einer Softwarekomponente muss im Allgemeinen nicht zwangsläufig mit einer funktionalen Komponente des modulartigen Systemaufbaus gleichgesetzt werden. Die funktionale Strukturierung von Komponenten des modulartigen Systemaufbaus unterstützt aber ein objektbasiertes Softwaredesign.

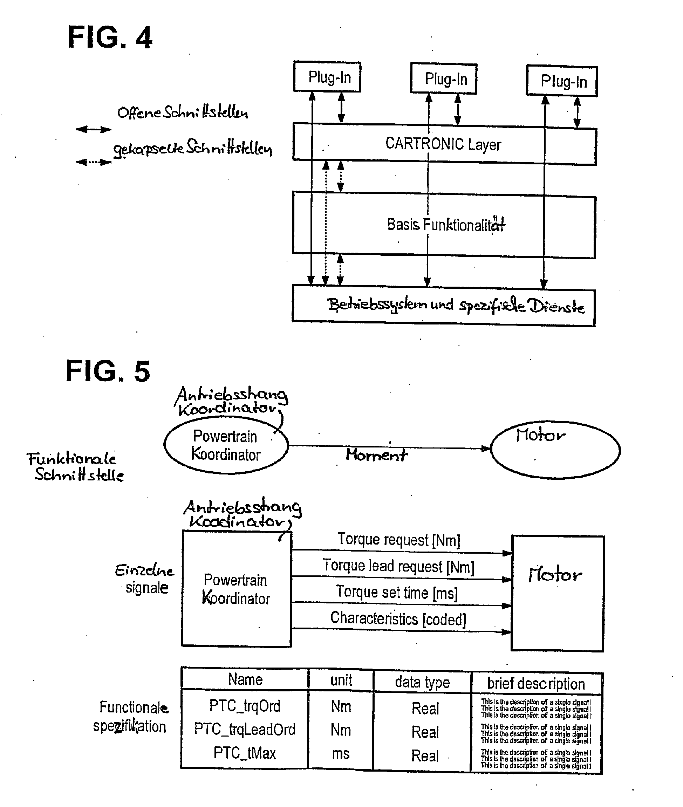

Fig. 4 zeigt eine produktorientierte, schematisierte Übersicht auf eine auf dem modulartigen Systemaufbau basierende Softwarearchitektur. Vereinfacht lassen sich folgende Elemente unterscheiden:
- "Operation System and Specific Services" mit Betriebssystem und spezifischen Diensten als Basis für alle Anwendungen, die auf dem Steuergerät laufen sollen;
- "Basic Functionality" bezeichnet Grundfunktionen des Steuergeräts zur Umsetzung universeller Anforderungen (z.B. Ansteuerung der Aktoren eines Verbrennungsmotors). Die Basisfunktionalitäten werden aus der Funktionsarchitektur ermittelt und strukturiert;
- "Layer": diese Softwarekomponente führt die Koordinationsaufgaben für mehrere Basisfunktionalitäten durch und bindet Plug-Ins ein;
- "Plug-In": diese Softwarekomponenten setzen konkrete, separierbare Aufgaben um, die über die Basisfunktionalität hinausgehen und durch die Komponente Layer koordiniert werden.

In dieser Aufteilung können offene und gekapselte Schnittstellen (open and encapsulated interfaces) unterschieden werden. Gekapselte Schnittstellen sind nach außen nicht freigegeben, während auf offene Schnittstellen frei zugegriffen werden kann. Die Modularität dieser Softwarearchitektur unterstützt die Austauschbarkeit von Teilfunktionalitäten und ermöglicht damit ein Softwaresharing.

Für die Implementierung des Systemverbunds spielt die Aufteilung von Funktionen auf konkrete Steuergeräte und die Abbildung von Kommunikationsbeziehungen auf eine Netzwerktopologie eine entscheidende Rolle. Während im traditionellen Ansatz "gewachsener" Systeme typischerweise im ersten Schritt die Aufteilung der Steuergeräte und deren Vernetzung vorgegeben wurde und sich Funktions- und Softwarearchitektur an diesen Gegebenheiten ausrichten musste, unterstützt der modulartige Systemaufbau hier einen systematischen simultanen Entwicklungsprozess.

Der modulartigen Systemaufbau erlaubt durch die zugrunde liegende Koordination verteilter Systeme eine flexible Systemrealisierung sowohl in dezentral verteilten als auch zentral konzentrierten Steuergeräteaufteilungen. Auch hinsichtlich der Verwendung spezifischer Bussysteme und Kommunikationsstandards erlaubt der modulartige Systemaufbau durch Kapselung der damit verbundenen Schnittstellen eine hohe Flexibilität.

Die je nach Marktsegment und Hersteller spezifisch unterschiedlichen Topologien werden daher vom modulartigen Systemaufbau mit einem hohen Wiederverwendungsgrad von Funktions- und Softwarekomponenten unterstützt.

Wie die vorhergehenden Ausführungen gezeigt haben, bilden klar defmierte, standardisierte Schnittstellen ein Kernelement für die Bewältigung der Herausforderungen eines Systemverbundes.

Die Systemarchitektur unterstützt die Erarbeitung universeller Schnittstellen. Je nach Sicht lassen sich dabei unterschiedliche Konkretisierungsformen unterscheiden, siehe Fig. 5:
- Funktionale Schnittstellen (basic functional interface), die ausgehend von einer vereinfachten Form (Beispiel: die Momentenanforderung an den Verbrennungsmotor) in abstrakte Signalschnittstellen detailliert werden (Beispiel: die Detaillierung der Momentenanforderung in Form eines momentanen Sollmoments (torque request), einem längerfristigen Führungsmoment (torque lead request), und z. B. weiteren Dynamik- und Statusinformationen (torque set time, characteristics),
- konkrete Softwareschnittstellen innerhalb eines Steuergeräts, wobei die funktionalen Schnittstellen durch softwaretechnische Anforderungen ergänzt werden (Beispiel: die Codierung der Momentenanforderung in Form von Variablennamen, Datentypen, Skalierungen, Amplituden- und Zeitquantisierung für momentanes Sollmoment, Führungsgröße, Dynamik- und Statusinformationen),
- sowie konkrete Signalschnittstellen auf einem Bus zwischen Steuergeräten (Beispiel: die Codierung der Momentenanforderung in Fonn von Signalnamen, Datentypen, Skalierungen, Amplituden- und Zeitquantisierung sowie Busadressen für momentanes Sollmoment, Führungsmoment, Dynamik- und Statusinformationen).

Ein wesentlicher Vorteil besteht darin, dass die unterschiedlichen Schnittstellenformen transparent zugeordnet und ineinander überführt werden können. Damit kann zum Zeitpunkt der Entwicklung einer Softwarefunktion eine weitgehende Unabhängigkeit der Software-Schnittstellen vom tatsächlichen Transportmechanismus der Information (innerhalb eines Steuergeräts oder über einen Bus) sichergestellt werden. Durch Kapselung spezifischer Teilsystemeigenschaften lässt sich außerdem sicherstellen, dass die Schnittstellen unabhängig von der technischen Ausführungsform der verbundenen Teilsysteme sind. Ein Beispiel bildet die Momentenschnittstelle zum Verbrennungsmotor, welche universell sowohl für Benzinals auch Dieselmotoren geeignet ist.

Diese Architektur unterstützt die nahtlose funktionale Integration unterschiedlicher elektronischer Fahrzeugsysteme. Darüber hinaus erlaubt das Plug-In-Konzept die Implementierung von Softwaremodulen zur charakteristischen Auslegung des Fahrverhaltens.

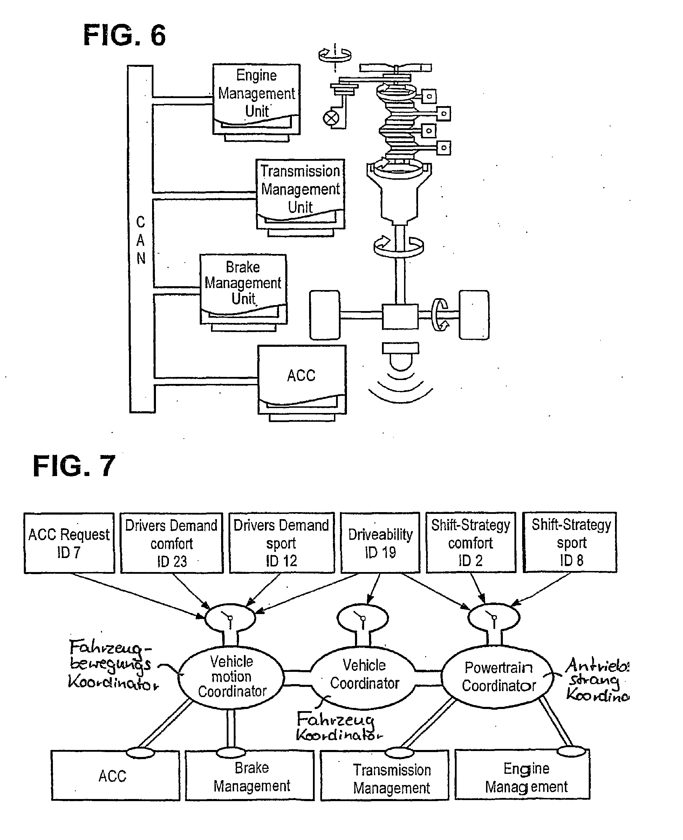

Fig. 6 zeigt symbolisch die Ausstattung eines Fahrzeugs. Die Motorsteuerung EMU (Engine Management Unit) ist mit den Sensoren und Aktuatoren des Motors sowie mit dem Sensor des Fahrpedalmoduls verbunden. Ferner verfügt das Fahrzeug über ein Bremsensteuergerät BMU (Brake Management Unit), eine elektronische Getriebesteuerung TMU (Transmission Management Unit) sowie ein ACC-Steuergerät, welches die Signale des Radarsensors verarbeitet. Ein CAN- (Controller Area Network) Bus verbindet die Steuergeräte untereinander.

Die Ausstattung erlaubt die flexible Konfiguration für unterschiedliche Fahrzeugcharaktere, nachfolgend exemplarisch in zwei Ausprägungen als "sportlich" und "komfortabel" bezeichnet. Ein Schalter im Fahrzeuginnenraum ermöglicht es dem Fahrer, zwischen diesen beiden Fahrzeugcharakteren umzuschalten. Im Unterschied zu herkömmlichen Implementierungen derartiger Fahrzeugcharakteristiken, beruht die Unterscheidung nicht nur auf unterschiedlichen Parameter-Applikationen innerhalb der Einzelsysteme, es werden vielmehr auf einer übergeordneten Ebene Softvare-"Plug-In"-Funktionalitäten zur Anpassung des Gesamtsystemverhaltens herangezogen, welche über Schnittstellen die jeweils hinsichtlich Software und Abstimmung unveränderten Einzelsysteme ansprechen.

Um den Komfortcharakter beispielsweise einer Limousine der Premiumklasse darzustellen, wurden exemplarisch folgende Anforderungen gestellt:

Das Fahrzeug soll ein Adaptive Cruise Control (ACC) System erhalten. Dieses System ermöglicht eine Anpassung der Geschwindigkeit an eine Fahrervorgabe sowie des Abstandes an vorausfahrende Fahrzeuge, indem Antrieb und Bremse elektronisch angesteuert werden. ACC ist ein innovatives Ausstattungsmerkmal, das den Premiumcharakter unterstreicht und den Fahrkomfort erhöht.

Elektronische Bremseingriffe für ACC und andere Längsregelsysteme (wie z. B. einem Fahrgeschwindigkeitsregler mit Bremseingriff) sollen über das Bremssteuergerät (BMU, Brake Management Unit) möglich sein.

Das Fahrzeug soll sich bei der Gasannahme "weich" anfühlen, d. h. ein ruckartiges Anfahren soll vermieden werden. Ebenso sollen Lastwechsel "sanft" erfolgen, d. h. die Eigendynamik des Triebstranges soll für den Fahrer unter keinen Umständen spürbar sein. Die Getriebeschaltung soll auf einen eher ökonomischen Betrieb ausgerichtet sein, d. h. der Motor soll vorrangig bei niedrigen Drehzahlen betrieben werden.

Im sportlichen Fahrzeugcharakter wurden als oberstes Ziel der Fahrspaß optimiert. Entsprechend dem vorgegebenen Fahrzeugcharakter sollten Getriebe- und Motorsteuerung wie folgt ausgelegt werden:

Der Motor soll spontan Gas annehmen, d. h. die Fahrpedalinterpretation soll "scharf" appliziert sein. Lastwechsel sollen schnell erfolgen können, d. h. die Dämpfung zur Unterdrückung der Triebstrangdynamik ist sekundär bezüglich der Spontaneität. Der Motorbetriebspunkt soll zu Gunsten hoher Drehzahlen ausgelegt sein, damit der Fahrer jederzeit über eine möglichst hohe Leistungsreserve verfügt.

Zur Demonstration der hohen Flexibilität wird bei dieser Auslegung auf Einbindung des Komfortfeatures "ACC" verzichtet.

Fig. 7 zeigt die verwendete Softwarearchitektur zur Umsetzung mit Plug-In Design in der Schichtenansicht:
Die oberste Schicht wird von sechs Plug-Ins gebildet, welche die charakteristischen Funktionen zur Umsetzung der Anforderungen an die zwei Fahrzeugcharaktere enthalten:
   - ACC Request:
      ein Regelkreis sorgt für die Anpassung der Geschwindigkeit oder des Abstandes. Der Regler ist typischerweise Bestandteil der ACC-Steuerung und hat eine Beschleunigung als Stellgröße. ACC-Request übernimmt diese und speist sie als Anforderung in den Vehicle Motion Coordinator ein.
   - Drivers Demand comfort bzw. sport (in Fig. 7 getrennt dargestellt):
      ein elektronisches Fahrpedal wird in dieser Komponente ausgewertet und als Vortriebsmoment am Getriebeausgang interpretiert. Diese Funktion hat starken Einfluß auf das Fahrverhalten und damit auf den Markencharakter. Das comfort Plug-In enthält eine weiche Fahrpedalinterpretation, während die sportliche Variante scharf ausgelegt ist, d. h. ein hohes Drehmoment bei vergleichsweise kleinem Fahrpedalweg. Das berechnete Vortriebsmoment am Getriebeausgang wird über die Schnittstelle als Anforderung an den Vehicle Motion Coordinator gestellt.
   - Driveability:
      dient u. a. der Festlegung eines globalen Optimierungskriteriums, also in einem Fall "Fahrkomfort" und in dem anderen "Sport". Ein weiterer Bestandteil dieser Komponente sind die Komfortfunktionen zur Lastschlagfilterung, d. h. Änderungen im Sollmoment werden so gedämpft, dass kein störendes Ruckeln oder Schwingungen im Triebstrang auftreten. Diese Gradientenbegrenzung verhindert die Erregung von Triebstrangschwingungen im Bereich der Eigenfrequenzen. Über eine Schnittstelle kann dem Vehicle Motion Coordinator ein minimaler und maximaler Gradient des Antriebssollmoments vorgegeben werden. Darüber hinaus wertet Driveabilty den Schalter aus, mit dem zwischen dem sportlichen und komfortablen Fahrzeugcharakter umgeschaltet werden kann. Als Alternative zu einem Schalter könnte hier ebenfalls eine Fahrertyperkennung realisiert werden. Der ausgewählte Modus wird anschließend an den Vehicle Coordinator weitergeleitet. Ein weiteres Feature ermöglicht, bei Gangwechseln den Ruck durch gezielte Steuerung des Motormoments zu vermeiden, indem ein minimal und ein maximal einzuhaltendes Motormoment an Powertrain Coordinator übergeben werden.
   - Shift Strategy comfort bzw. sport (in Fig. 7 getrennt dargestellt):
      enthält eine Rechenvorschrift, die aus dem Sollwert für das Drehmoment am Getriebeausgang und der Fahrzeuggeschwindigkeit den Sollwert für die Getriebeübersetzung und das Motormoment bestimmt. Um die Vorgabe des Sollmoments zu erfüllen, ergibt sich bezüglich aktueller Geschwindigkeit ein Freiheitsgrad in der Wahl des Übersetzungsverhältnisses. Das Übersetzungsverhältnis wird entweder zugunsten eines ökonomischen Motorbetriebspunktes (Shift-Strategy comfort) oder zugunsten einer hohen Leistungsreserve (Shift-Strategy sport) gewählt. Sowohl der Sollwert für das Übersetzungsverhältnis als auch für das Motormoment werden an den Coordinator Powertrain gesendet. Darüber hinaus ist eine Funktion zur Unterdrückung von Pendelschaltungen enthalten. Über die gemeinsame Schnittstelle werden dem Powertrain Coordinator ein minimal bzw. maximal zulässiger Gang vorgegeben, welche bei Schaltungen einzuhalten sind.

Unterhalb der Plug-Ins befindet sich in Fig. 7 der Layer, welcher die Koordinatoren Vehicle Coordinator, Vehicle Motion Coordinator und Powertrain Coordinator umfaßt. Jeder Koordinator verfügt über beliebig viele Ausführungen einer klar definierten fixen Schnittstelle zur Kommunikation mit den Plug-Ins. Für jedes Plug-In, das mit einem Koordinator kommunizieren möchte, stellt dieser eine weitere Ausführung seiner Schnittstelle zur Verfügung. In diesem Fall ist z. B. Vehicle Motion Coordinator insgesamt mit drei Plug-Ins verbunden: ACC Request, Drivers Demand und Driveability. Die einheitlichen Schnittstellen ermöglichen die Darstellung eines breiten Spektrums an Funktionalität in den Plug-Ins. Während die Koordinatoren die Plug-Ins mit allen globalen Fahrzeugdaten versorgen, sind die Schnittstellen in umgekehrter Richtung - also vom Plug-In zu den Koordinatoren - dagegen vergleichsweise schmalbandig. Häufig kommt es innerhalb eines Koordinators zu Konflikten zwischen konkurrierenden Anforderungen (z. B. gleichzeitiger Vortriebswunsch von ACC und über Fahrpedal). Diese können mit Hilfe eines erfindungsgemäßen flexiblen Priorisierungsverfahrens zu Gunsten einer vorgebbaren Strategie entschieden werden. In einer applizierbaren Priorisierungstabelle wird festgelegt, welche Plug-Ins aufgerufen werden. Das Prinzip dieses Priorisierungsverfahrens wird nachfolgend am Beispiel des Vehicle Motion Coordinator verdeutlicht.

Mit der tiefer gelegenen Softwareschicht der Basic Functionality ist der Layer über Standard-Schnittstellen verbunden. Diese Basisfunktionen verhalten sich aus Sicht des Layers wie intelligente Sensoren oder Aktuatoren. Zum Beispiel fungiert die Komponente Engine Management als ein Momentensteller, Transmission Management setzt das befohlene Übersetzungsverhältnis um, Brake Management stellt die geforderte Sollbeschleunigung ein und ACC liefert die Daten aus Objekterkennung und ACC-Bedienteil.

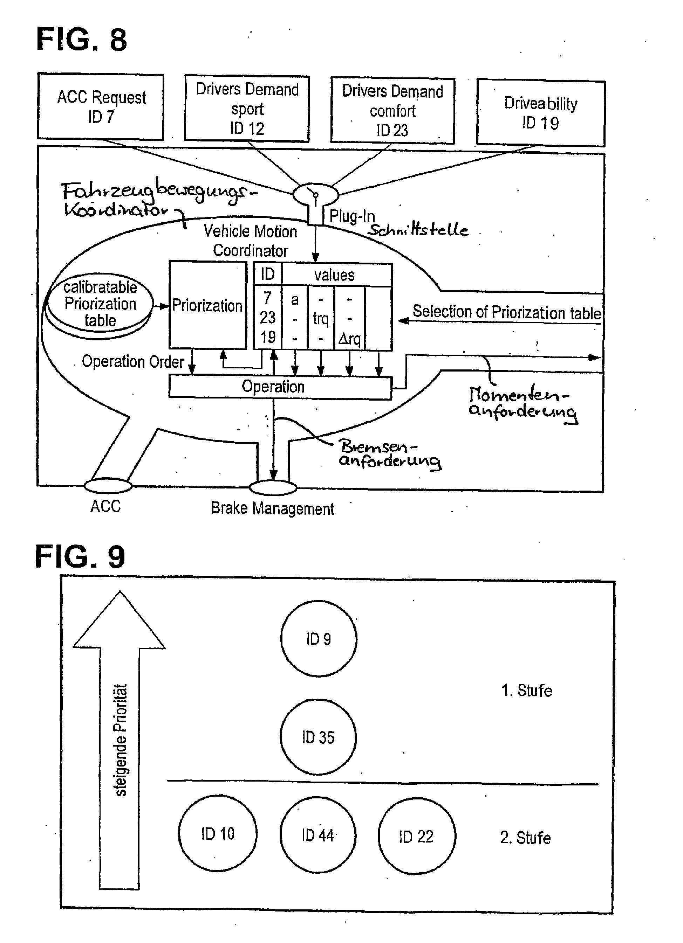

Fig. 8 zeigt den inneren Aufbau des Vehicle Motion Coordinators aus Fig. 7. Über einheitliche Schnittstellen werden die Informationen der Plug-Ins in einen Puffer eingelesen. Die Schnittstelleninformation besteht jeweils aus der Identität (ID), die jedes Plug-In eindeutig kennzeichnet, sowie einen Nutzanteil (values), welcher die Funktionalität bestimmt. Zum Beispiel hat ACC Request die ID 7 und sendet eine Beschleunigungsanforderung (a), Drivers Demand sport (ID 12) sendet ein Vortriebsmoment am Getriebeausgang (trq) und Driveability (ID 19) eine obere und unter Grenze für den Gradienten des Vortriebsmoments am Getriebeausgang (trq). Ein geeignetes erfindungsgemäßes Priorisierungsverfahren (Priorization), in diesem Fall eine erfindungsgemäße lineare Priorisierung, legt die Abarbeitungsreihenfolge (Operation Order) der Anforderungen aus den Plug-Ins fest und teilt das Ergebnis der ausführenden Instanz (Operation) mit. Die Prioritäten können für jede ID in einer Priorisierungstabelle bzw. -liste (calibratable Priorization table) appliziert werden. Zur Darstellung unterschiedlicher Fahrzeugcharaktere können gleichzeitig mehrere Priorisierungstabellen abgelegt sein, z. B. für "Sport" und für "Comfort". In diesem Fall enthält beispielsweise die Priorisierungstabelle für "Comfort" lediglich den Aufruf des Plug-Ins Drivers Demand comfort (ID 23), während z. B. das Plug-In Drivers Demand sport (ID 12) nicht aufgerufen wird. Umgekehrt enthält die Priorisierungstabelle für einen sportlichen Fahrbetrieb nur einen Eintrag der Plug-Ins Drivers Demand sport (ID 12) und Driveability (ID 19), wobei ACC-Request (ID 7) gezielt nicht berücksichtigt wird. Die Auswahl der Priorisierungstabelle wird von Vehicle Coordinator getroffen. Die ausführende Einheit (Operation) ruft die Anforderungen der Plug-Ins nach Vorgabe der Operation Order auf und verarbeitet diese:

Im Ergebnis wird eine Sollbeschleunigung ermittelt, welche auf die Stellglieder Antrieb (Motor und Getriebe) oder Bremse verteilt wird. Im Fall einer Bremsung wird sie über die Schnittstelle zum Brake Management weitergeleitet. Im Antriebsfall wird die Beschleunigung mithilfe der Zugkraftgleichung in ein Sollmoment am Getriebeausgang umgerechnet, anschließend kommt es zur Koordination mit der Anforderung aus Drivers Demand. In der Regel setzt sich die Anforderung mit dem größeren Drehmomentenwunsch durch. In Ausnahmefällen (je nach Priorization table) kann es aber auch sinnvoll sein, dass zu Gunsten der Beschleunigungsanforderung des ACC entschieden wird. Zum Beispiel erweist es sich als komfortabel, eine Bremsverzögerung nicht schlagartig zu beenden, wenn eine aktive Bremsung des ACC vorliegt und der Fahrer gleichzeitig Gas gibt, d. h. wenn der Fahrer überreitet. Das resultierende Sollmoment am Getriebeausgang wird anschließend an den Vehicle Coordinator (siehe auch Fig. 7) weitergeleitet.

Der Vehicle Coordinator leitet das Sollmoment an den Powertrain Coordinator (siehe auch Fig. 7) weiter und legt die Berechnungsreihenfolge aller Koordinatoren fest. Darüber hinaus sorgt er für die Umsetzung der globalen Fahrstrategie. Diese wird von Driveability in Form eines globalen Optimierungskriteriums ("Komfort" oder "Sport") entsprechend der Schalterstellung bestimmt und über die gemeinsame Schnittstelle gesendet. Auf Grundlage des Optimierungskriteriums legt Vehicle Coordinator die zu verwendenden Priorisierungstabellen in den Koordinatoren fest.

Der Powertrain Coordinator setzt die Anforderung zur Realisierung eines Getriebeausgangmoments von Vehicle Coordinator um. Ähnlich wie in Coordinator Vehicle Motion wird anhand eines erfindungsgemäßen Priorisierungsverfahrens die Bearbeitungsreihenfolge der Anforderungen aus den Plug-Ins, Shift-Strategy comfort bzw. sport sowie Driveability bestimmt. Je nach ausgewählter Priorisierungstabelle wird nur eine der beiden Schaltstrategien über die ID aufgerufen. Transmission Management wird unter Berücksichtigung des minimal bzw. maximal zulässigen Gangs aus Shift-Strategy zur Umsetzung des Sollwerts beauftragt. Bei einem Gangwechsel wird das Motormoment nach vorgegebener unterer und oberer Grenze aus Driveability an die Basisfunktion Engine übergeben.

Alle Anforderungen an die Charaktere "sport" und "comfort" konnten mit insgesamt sechs Plug-Ins erfolgreich umgesetzt werden. Mit dem Schalter im Fahrzeuginnenraum kann während der Fahrt zwischen beiden Modi umgeschaltet werden. Die Integration des ACC-Systems in der "comfort"-Ausprägung erfolgte ohne Änderungen in dem Layer. Dies untermauert die Mächtigkeit der Schnittstellen zu den Plug-Ins und erlaubt die zukünftige Integration anderer Anwendungen wie z. B. einer situationsabhängigen Geschwindigkeitsbegrenzung oder Cruise Control mit Bremseingriff als Alternative zu ACC. Die standardisierten Schnittstellen der Layer mit den Basisfunktionen, wie z. B. Engine und Transmission, ermöglicht außerdem eine Entkopplung der Fahrfunktionen von den Aggregaten: sie ermöglichen die Verwendung der gleichen Fahrfunktionen für unterschiedliche Motortypen (Otto- und Dieselmotoren) und unterschiedliche Getriebetypen (z. B. für Stufenautomatikgetriebe und CVT).

Mit dem applizierbaren erfindungsgemäßen Priorisierungsverfahren werden auch dynamische Wechsel zwischen unterschiedlichen Fahrverhaltensmodi möglich, wenn dies - z. B. mit einer Fahrertyperkennung - gewünscht wird. Im vorliegenden Beispiel demonstriert der Wechsel zwischen den Typen sport und comfort der Plug-Ins Drivers Demand und Shift-Strategy die Flexibilität des Priorisierungsverfahrens für die Austauschbarkeit ganzer Algorithmen.
Im Gegensatz zu herkömmlichen Systemen, die lediglich unterschiedliche Charakterisierung des Fahrzeugverhaltens durch Parameteränderung in isolierten Teilsystemen erlauben, ermöglicht die Systemarchitektur mit Hilfe des erfindungsgemäßen Priorisierungsverfahrens eine tief greifende, flexible Markencharakterisierung des Gesamtfahrzeugs durch Plug-Ins bei gleichzeitiger Wiederverwendung der zugrunde liegenden Software.

Es handelt sich um eine übergreifende, offene Systemarchitektur für alle Steuerungs- und Regelungsaufgaben im Kraftfahrzeug. Sie ist unabhängig vom Fahrzeugtyp und von der Steuergeräte-Konfiguration. Sie beruht auf einer klar gegliederten, hierarchischen Funktionsarchitektur und modularen Software mit offenen, einheitlichen Schnittstellen in den beteiligten Steuergeräten. Damit können die Aufgaben flexibel auf einzelne Hardware-Komponenten des elektronischen Systems verteilt werden. Es lassen sich die immer komplexeren Fahrzeugsysteme leichter beherrschen.

Am Beispiel wurde gezeigt, dass eine flexible Markencharakterisierung nach einem Top-Down Ansatz unterstützt wird. Die charakteristischen Funktionen für die Fahrbarkeit sind jeweils in einem Plug-In konzentriert. Ein applizierbares erfindungsgemäßes Priorisierungsverfahren ermöglicht die flexible Koordination der Plug-Ins. Es gelingt dadurch, mit geringem Softwareaufwand völlig unterschiedliche Fahrzeugcharaktere darzustellen. Definierte Schnittstellen erlauben die modulare Integration zusätzlicher Systemelemente. Das Plug-In Konzept erleichtert ein Softwaresharing, welches dem OEM (original equipment manufacturer, d. h. Automobilhersteller) die Möglichkeit gibt, seine Marke durch selbständig entwickelte Softwaremodule zu charakterisieren. Ein hohes Maß an Wiederverwendbarkeit der zugrunde liegenden Softwarekomponenten unterstützt die Anforderungen nach Kostengünstigkeit und Softwarequalität.

In Kraftfahrzeugen muss normalerweise zwischen unterschiedlichen Vortriebswünschen, die entweder vom Fahrer oder von Assistenzsystemen, z. B. FGR, ACC und ANB, kommen, gewählt werden. Die Steuergerätesoftware enthält einen Programmteil, der den wichtigsten Anforderer auswählt.
Während der Implementierung des Auswahlverfahrens ist bekannt, welche Systeme Anforderungen stellen können und wie sie untereinander gewichtet sind. Diese Anforderungen werden in einer starren Logik miteinander verknüpft.

Die bisher eingesetzten Verfahren haben den Nachteil, dass im Vorhinein bekannt sein muss, welches System Vortriebswünsche geben kann und welche Anforderungskombinationen es geben kann. Dadurch muss für jede Kombination von Systemen das Verfahren angepasst werden.

Ziel der Erfindung ist ein Verfahren, mit dem man die Auswahl der weitergeleiteten Anforderung bzw. des Wunsches, insbesondere des Vortriebswunsches, unabhängig von der Anzahl und der Funktionsweise der anfordernden Systeme treffen kann.

Mit Hilfe eines erfindungsgemäßen Priorisierungsverfahrens, insbesondere als lineare Priorisierung oder als Maximal-(Minimal-)Auswahl, kann die Auswahl eines weitergeleiteten Anforderers bzw. Plug-Ins unabhängig von der Anzahl und der Funktionsweise der anfordernden Systeme getroffen werden. Bei der linearen Priorisierung wird eine Liste bzw. Tabelle von Anforderem sequentiell beginnend mit dem Anforderer mit der höchsten Priorität abgearbeitet, wobei diese Liste für die lineare Priorisierung sortiert ist nach dem Grad der Priorität der Anforderer. Der Abbruch des Abfragens der Liste erfolgt, sobald ein Anforderer einen Anforderungswunsch enthält. Dieser Anforderer wird damit ausgewählt. Die übrigen noch nicht abgefragten Anforderer werden somit nicht berücksichtigt.

Bei der Max-(Min-)Auswahl werden alle Anforderer abgefragt, die in der Liste für die Max-(Min-)Auswahl stehen. Es wird derjenige Anforderer mit dem maximalen (minimalen) Anforderungswunsch ausgewählt.

Es können auch beide Verfahren beliebig miteinander kombiniert werden, beispielsweise indem zuerst eine lineare Priorisierung durchgeführt wird und daran anschließend eine Min-Auswahl, falls die lineare Priorisierung kein Ergebnis liefert.

Im Folgenden wird beispielhaft der Ablauf einer Auswahl eines Vortriebswunsches beschrieben. Das System beinhaltet z. B. die folgenden Anforderer:
- Fahrpedal (ID 10)
- Automatische Notbremse (ID 9)
- Bremspedal (ID 35)
- FGR (ID 44)
- Leerlaufregler (ID 22).

Das im Beispiel angewendete Verfahren, um den wichtigsten Vortriebswunsch zu ermitteln, besteht aus 2 Stufen:
- Lineare Priorisierung (z. B. als 1. Stufe)
   Hier wird eine Liste sequenziell durchgearbeitet und sobald ein Anforderer einen Anforderungswunsch hat, abgebrochen. Je höher ein Anforderer in der Liste steht, je höher ist seine Priorität,
- Max-Auswahl (z. B. als 2.Stufe)
   Es werden alle Anforderer abgefragt. Es wird der Wunsch mit beispielsweise dem höchsten Vortriebsmoment ausgewählt.

In Fig. 9 ist eine grafische Darstellung einer erfindungsgemäßen linearen Priorisierung (1. Stufe) und eine Max-Auswahl (2. Stufe) dargestellt. Bei der linearen Priorisierung hat der Anforderer ID9 (automatische Notbremse) die höchste Priorität und wird zuerst abgefragt. Der Anforderer ID35 (Bremspedal) hat eine nachgeordnete Priorität, d. h. er wird nachfolgend abgefragt. In der Max-Auswahl (2. Stufe) sind die Anforderer ID10 (Fahrpedal), ID44 (FGR) und ID22 (Leerlaufregler) gleichwertig auf der gleichen Priorisierungsstufe und werden alle abgefragt. Der Wunsch mit z. B. dem höchsten Vortriebsmoment wird ausgewählt. Beide Verfahren können sowohl getrennt als auch in Kombination angewendet werden.

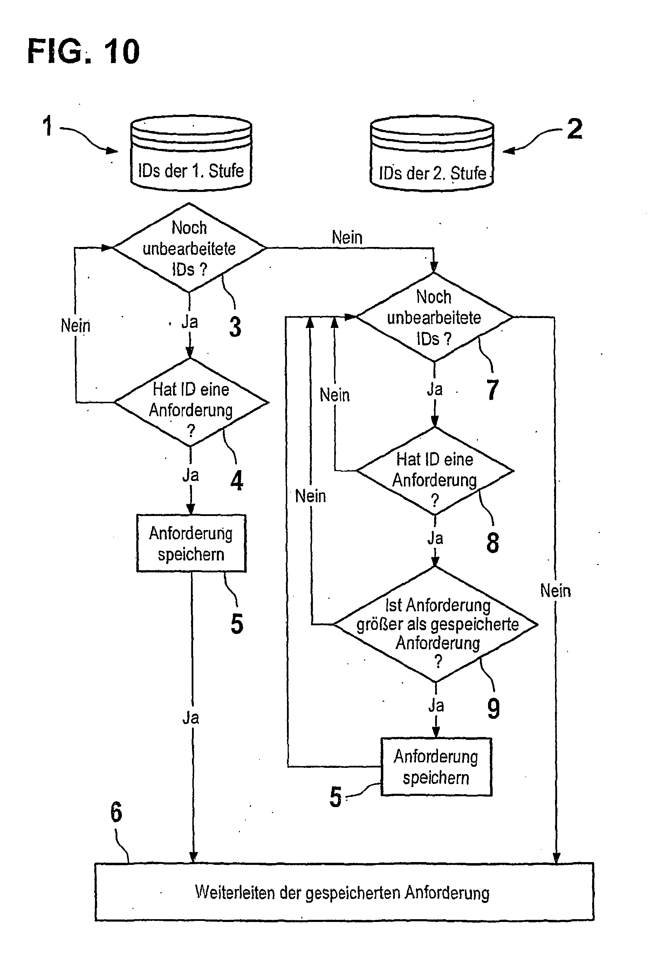

Fig. 10 zeigt ein Ablaufschema eines erfindungsgemäßen Priorisierungsverfahrens, wobei die lineare Priorisierung (1. Stufe) 1 mit der Max-Auswahl (2. Stufe) 2 miteinander kombiniert sind. Die linke Hälfte zeigt das lineare Priorisierungsverfahren 1 und die rechte Hälfte die Max-Auswahl 2. Im linearen Priorisierungsverfahren 1 wird im ersten Operationsschritt 3 zunächst abgefragt, ob noch unbearbeitete IDs vorhanden sind, z. B. entsprechend Fig. 9 ID9 und ID35. Im Operationsschritt 4 wird auf die Abfrage, ob eine ID eine Anforderung hat, bei "ja" die Anforderung gespeichert 5 und weitergeleitet 6 und damit das Verfahren bzw. Ablaufschema abgebrochen, falls "nein" wird zurückgehend auf den vorhergehenden Operationsschritt 3 erneut abgefragt, ob noch unbearbeitete IDs vorhanden sind und das Verfahren so lange fortgesetzt, bis einen ID mit Anforderung vorhanden ist. Die Bearbeitung der IDs erfolgt in der Reihenfolge ihrer Priorisierung, z. B. bei Fig. 9 ID9 und danach ID35. Falls keine der IDs in der 1. Stufe über eine Anforderung verfügt, wird zu den IDs der 2. Stufe übergegangen, z. B. in Fig. 9, ID10, ID44 und ID22.

In der 2. Stufe mit Max-Auswahl 2 wird im ersten Operationsschritt 7 abgefragt, ob noch unbearbeitete IDs vorhanden sind. Falls "ja", wird im nächsten Operationsschritt S abgefragt, ob ein ID eine Anforderung hat. Falls keine Anforderung vorhanden ist, wird auf den vorhergehenden Operationsschritt 7 zurückgegangen und falls "ja" wird im nächsten Operationsschritt 9 verglichen, ob der gerade abgefragte Anforderer größer ist als ein bereits gespeicherter Anforderer. Falls "nein", wird in Operationsschritt 7 zurückgesprungen, und falls "ja", wird die Anforderung gespeichert 5. Sind alle IDs der 2. Stufe abgefragt, d. h. in Operationsschritt 7 keine unbearbeiteten IDs mehr vorhanden, wird auf Operationsschritt 6 zum Weiterleiten der gespeicherten Anforderung gesprungen. Dadurch kann für die IDs der zweiten Stufe die größte Anforderung ermittelt und weitergeleitet werden, falls - da in Kombination mit der linearen Priorisierung verwendet - die IDs der 1. Stufe keine Anforderung enthalten.

Als weiteres Verfahren kommt z. B. noch eine Mittelwertbildung oder ein Kombination dieser Verfahren in Betracht. Vielen realen Anwendungsfällen wird dieses Verfahren nicht genügen. Im Folgenden sind 2 weitere Ausbaustufen des Systems beschrieben:
- Erweiterung um Min/Max-Auswahl
   Sobald die Anforderer nicht nur den Motor, sondern auch die Bremse ansteuern können, kommt man nicht mit dem im Beispiel beschrieben Verfahren aus, da ein Bremseneingriff gegebenenfalls eine höhere Priorität haben soll, als ein Beschleunigungseingriff. Um diesem Umstand Rechnung zu tragen, muss die 2. Stufe von einer Max-Auswahl in eine Min/Max-Auswahl verändert werden. Die Min/Max-Auswahl funktioniert wie folgt:
   Sobald ein Anforderer einen Bremseneingriff anfordert, gewinnt der niedrigste Vortriebswunsch (maximale Verzögerung). Wenn es keinen Bremseneingriff gibt, wird die maximale Beschleunigung ausgewählt.
- Erweiterung um Autoritäten
   Das oben beschriebene Verfahren entspricht nicht, den zurzeit üblichen Verfahren, da das Fahrpedal einen Bremseingriff des FGR+ oder des ACC überstimmen kann. Aus diesem Grund kann das beschriebene Verfahren noch um eine Stufe erweitert werden, die Autoritäten genannt werden.
   Bei diesem Verfahren kann jeder Anforderer bestimmte Anforderungsbereiche während der Min/Max-Auswahl ausblenden. Das bedeutet, dass z. B. das Fahrpedal alle Bremseneingriffe ausblenden kann. Dadurch werden alle Bremseneingriffe während der Minimal-Auswahl ignoriert, aber nicht, z. B. die Bremse, die in der linearen Priorisierung angesiedelt wäre.

Um die IDs effizient zu handhaben, werden sie in Listen verwaltet, die sequenziell abgearbeitet werden. Ein Anpassen der Prioritäten auf globale Optimierungskriterien (z. B. Ökoabstimmung, Sportabstimmung oder Wintererkennung) kann erfolgen, wenn die IDs in 2-dimensionalen Listen verwaltet werden und je nach globalem Optinierungskriterium eine andere Reihe benutzt wird.
Wenn nun ein Anforderer hinzugefügt werden soll, so ist er in die richtigen Tabellen einzutragen und wird damit automatisch bei der nächsten Auswahl mit berücksichtigt.

Es muss ausgeschlossen werden, dass eine ungültige Anforderung an den Motor oder die Bremse weitergeleitet wird. Aus diesem Grund muss sichergestellt sein, dass das System entweder mit einem gültigen Wert vorinitialisiert wird oder es muss garantiert sein, dass bei jeder Auswahl immer mindestens ein Anforderer einen Wert anfordert.

Bei den anonymen erfindungsgemäßen Priorisierungsverfahren von Informationsgebern weiß das Auswahlverfahren nicht, welche Qualität der Anforderer hat. Die einzigen Informationen, die es hat, sind die ID und die Position in den jeweiligen Tabellen der Auswahlverfahren. Dies führt dazu, dass es keine inneren Abhängigkeiten von Anforderer und Auswahlsystem gibt. Ein derartiges Auswahlverfahren ist immer dann nötig, wenn man die Anzahl der Anforderer ändern können soll, ohne den Code des Auswahlverfahrens zu ändern. Dieses Verfahren kann z. B. in einer Motorsteuerung angewendet werden, wie das obige Beispiel zeigt. Es gibt aber noch viele weitere Produkte, bei denen dieses Verfahren Vorteile bringt.

Abschließend werden nochmals die Vorteile aufgeführt:
- keine Abhängigkeiten zwischen Auswahlverfahren und Anforderer und damit vermehrten Software Reuse des Auswahlverfahrens und der Anforderer (FGR, Fahrpedal, ...),
- verminderter Code- und Rechenzeitverbrauch bei komplexen Systemen (viele Anforderer), da das Auswahlverfahren unabhängig ist von Querbeziehungen der Anforderer,
- leichtere Erweiterbarkeit des Systems (Hinzufügen von weiteren Anforderern). Solange die Anforderer die angebotenen, abstrakten Schnittstelle benutzen können und genügend Speicherplatz für die ID-Tabellen reserviert worden ist, kann das System um beliebig viele Anforderer erweitert werden, ohne Programmcode ändern zu müssen.
- Wechsel zwischen Prioritätensätzen während der Laufzeit möglich,
- das System kann in Zukunft um eine dynamische Anmeldung von Anforderern erweitert werden, und
- die Priorisierungsverfahren zur Auswertung der Anforderungen verschiedener Plug-Ins können auf Grund deren Einheitlichkeit (alle Plug-Ins fordern zur Beschleunigung des Fahrzeugs ein Getriebeausgangsmoment (Führungsgröße des Systems) so ausgelegt werden, dass zur Priorisierung nicht bekannt sein muss, welches System hinter der Anforderung steht (es spielt aus Sicht des Priorisierungsverfahrens keine Rolle, welche Funktionalität ein Plug-In erfüllt, sondern nur, welche Priorität es hat). Durch diese Anonymisierung der Anforderer ist es möglich, die Anzahl der zu berücksichtigenden Plug-Ins frei zu wählen, ohne dafür das Programm ändern zu müssen. Dadurch vereinfacht sich die Konfiguration des Systems zur Anpassung an eine bestimmte Fahrzeug- und Funktionsvariante erheblich und es können auch nachträglich noch Funktionen hinzugefügt werden, die zunächst nicht mit eingeplant waren.

## Patentansprüche

1. Verfahren zur Priorisierung von Anforderern bzw. Plug-Ins, insbesondere für die koordinierten Antriebsstrangsteuerung für ein Kraftfahrzeug, wobei in einer ersten Stufe
- eine erste Liste mit Anforderem bzw. Plug-Ins nach dem Grad der Priorität aufsteigend oder abfallend sortiert wird,
- die sortierte erste Liste sequentiell beginnend mit dem Anforderer bzw. Plug-In mit der höchsten Priorität abgearbeitet wird,
- das Abarbeiten der ersten Liste abgebrochen wird, sobald ein Anforderer bzw. Plug-In einen Vortriebswunsch enthält, um diesen Vortriebswunsch auszuwählen, wobei übrige noch nicht abgefragte Anforderer bzw. Plug-Ins nicht berücksichtigt werden, **dadurch gekennzeichnet,**
- **dass** in einer zweiten Stufe die Abarbeitung einer zweiten Liste mit Anforderern bzw. Plug-Ins begonnen wird, wenn kein Anforderer bzw. Plug-In der ersten Liste einen Vortriebswunsch enthält,
- **dass** in der zweiten Liste mit Anforderem bzw. Plug-Ins alle Anforderer bzw. Plug-In in beliebiger Reihenfolge abgearbeitet werden, beispielsweise sequentiell,
- und **dass** in der zweiten Stufe aus den Vortriebswünschen der Anforderer bzw. Plug-Ins der zweiten Liste der Vortriebswunsch mit dem maximalen oder dem minimalen Vortriebswunsch oder dass der durchschnittliche Vortriebswunsch der Anforderer bzw. Plug-Ins der zweiten Liste ermittelt.

2. Priorisierungsverfahren nach Anspruch 1, **dadurch gekennzeichnet, dass** verschiedene Listen zum Anpassen auf globale Optimierungskriterien, z. B. Ökoabstimmung, Sportabstimmung oder Wintererkennung, abgearbeitet werden.

3. Priorisierungsverfahren nach einem der Ansprüche 1 oder 2, **dadurch gekennzeichnet, dass** jeder Anforderer bzw. jedes Plug-In durch eine Identität (ID), vorzugsweise als Zahl, und eine Position in den verschiedenen Listen für das Abarbeiten eindeutig gekennzeichnet ist.

4. Priorisierungsverfahren nach einem der vorhergehenden Ansprüche, **dadurch gekennzeichnet, dass** zur Ermittlung des maximalen (minimalen) Vortriebswunsch:
- der erste abgefragte Vortriebswunsch zwischengespeichert wird,
- jeder abgefragte Vortriebswunsch mit dem zwischengespeicherten Vortriebswunsch verglichen wird, ob er größer (kleiner) ist als der zwischengespeicherte Vortriebswunsch,
- der abgefragte Vortriebswunsch zwischengespeichert wird, falls er größer (kleiner) ist als der zwischengespeicherte Vortriebswunsch und andernfalls keine Speicherung erfolgt,
- nach der Abfrage aller Anforderer der maximale (minimale) Vortriebswunsch zwischengespeichert ist und weitergeleitet wird.

5. Priorisierungsverfahren nach einem der vorhergehenden Ansprüche, **dadurch gekennzeichnet, dass** bei bestimmten Anforderern, z. B. Anforderer, die einen Motor und eine Bremse ansteuern, bei einem bestimmten Vortriebswunsch, z. B. einem Bremseingriff, der minimale (maximale) Vortriebswunsch, ausgewählt wird und andernfalls der maximale (minimale) Vortriebswunsch.

6. Priorisierungsverfahren nach einem der vorhergehenden Ansprüche, **dadurch gekennzeichnet, dass** einzelne Anforderer bewirken, dass bestimmte andere Anforderer bei der Ermittlung des maximalen (minimalen) Vortriebswunsch nicht berücksichtigt werden, z. B. ein Anforderer-Fahrpedal bewirkt, dass alle Anforderer, die eine Bremsung/Verzögerung bewirken, nicht berücksichtigt werden.

7. Vorrichtung zur Durchführung eines Priorisierungsverfahren nach einem der vorhergehenden Ansprüche, **dadurch gekennzeichnet, dass** es mit einem Computersystem mit wenigstens einem Prozessor und wenigstens einem Speicher zur Steuerung durchgeführt wird, mit einer Softwarearchitektur mit folgenden Elementen bzw. Komponenten:
- ein Operation System and Specific Services mit Betriebssystem und spezifischen Diensten als Basis für alle anderen Elemente und Anwendungen,
- eine Basic Functionality zur Umsetzung universeller Anforderungen,
- einen Layer zur Koordinierung von Aufgaben für Basisfunktionalitäten der Basic Functionality und zur Einbindung von Plug-Ins,
- wenigstens ein Plug-In zur Umsetzung von konkreten Aufgaben bzw. Funktionen, die über die Basisfunktionalität hinausgehen und vom Layer koordiniert werden, wobei die Plug-Ins insbesondere modulartig austauschbar sind.

8. Vorrichtung nach Anspruch 7, **dadurch gekennzeichnet, dass** in der Softwarearchitektur offene Schnittstellen (Open Interfaces) auf die von außen zugegriffen werden kann und/oder geschlossene Schnittstellen (Incapsulated Interfaces), die nach außen nicht freigegeben sind, integriert sind.

9. Vorrichtung nach Anspruch 7 oder 8, **dadurch gekennzeichnet, dass** als Plug-Ins beispielsweise ein ACC (Adaptive Cruise Control)-Request, ein Drivers Demand (comfort/sport), Driveability oder Shift Strategie (comfort/sport) verwendet werden.

10. Vorrichtung nach einem der Ansprüche 7 bis 9, **dadurch gekennzeichnet, dass** der Layer die Koordinatoren Vehicle Coordinator, Vehicle Motion Coordinator und Powertrain Coordinator umfasst, wobei im Vehicle Motion Coordinator eine Auswahl der Plug-Ins durchgeführt wird.

11. Vorrichtung nach Anspruch 10, **dadurch gekennzeichnet, dass** jeder Koordinator über Schnittstellen mit den Plug-Ins zur Kommunikation verbunden ist.

12. Vorrichtung nach einem der Ansprüche 7 bis 11, **dadurch gekennzeichnet, dass** der Layer über Schnittstellen zur Kommunikation mit der Basic Functionality verbunden ist, welche Basisfunktionen enthält, die wie Sensoren oder Aktoren agieren.

13. Vorrichtung nach einem der Ansprüche 7 bis 12, **dadurch gekennzeichnet, dass** durch die modulartige Austauschbarkeit der Plug-Ins das Priorisierungsverfahren flexibel an unterschiedliche Fahrzeug- und Steuergerätekonfigurationen anpassbar ist und Funktionen einfach implementierbar sind, wobei Anforderungen verschiedener Systeme in einheitlicher Art auf Basis von Systemführungsgrößen, z. B. Getriebeausgangsmoment, zentral eingebracht werden.

14. Computerprogramm mit Programmcodemitteln, um alle Schritte eines Verfahrens nach einem der Ansprüche 1 bis 6 durchzuführen, wenn das Computerprogramm auf einem Computer oder einer entsprechenden Recheneinheit durchgeführt wird.

15. Computerprogrammprodukt mit Programmcodemitteln, die auf einem lesbaren Datenträger gespeichert sind, um ein Verfahren nach einem der Ansprüche 1 bis 6 durchzuführen, wenn das Computerprogramm auf einem Computer oder einer entsprechenden Rechnereinheit ausgeführt wird.

16. Steuerungssystem für ein Fahrzeug, das ausgelegt ist, um ein Priorisierungsverfahren nach einem der Ansprüche 1 bis 6 auszuführen.

## Claims

1. Method for prioritizing requests and plug-ins, in particular for the coordinated drive train control for a motor vehicle, wherein in a first stage
- a first list with requests or plug-ins is sorted in a rising or falling fashion according to the degree of priority,
- the sorted first list is processed sequentially starting with the requesting party or plug-in with the highest priority,
- the processing of the first list is aborted as soon as a requesting party or plug-in contains a propulsion request, in order to select this propulsion request, wherein other requesting parties or plug-ins which are not yet requested are not taken into account,
**characterized in that**
- in a second stage the processing of a second list with requesting parties or plug-ins is started if no requesting party or plug-in of the first list contains a propulsion request,
- **in that** in the second list with requesting parties or plug-ins all the requesting parties or plug-ins are processed, for example sequentially, in any desired order,
- and **in that** in the second stage the propulsion request with the maximum or the minimum propulsion request is determined from the propulsion requests of the requesting parties or plug-ins, or **in that** the average propulsion request of the requesting parties or plug-ins of the second list is determined.

2. Prioritization method according to Claim 1, **characterized in that** various lists are processed in order to adapt to global optimization criteria, for example ecological adaptation, sport adaptation or winter detection.

3. Prioritization method according to either of Claims 1 and 2, **characterized in that** each requesting party or each plug-in is characterized unambiguously by an identifier (ID), preferably as a number, and a position in the various lists for the processing.

4. Prioritization method according to one of the preceding claims, **characterized in that** in order to determine the maximum (minimum) propulsion request:
- the first interrogated propulsion request is buffered,
- each interrogated propulsion request is compared with the buffered propulsion request to determine whether it is larger (smaller) than the buffered propulsion request,
- the interrogated propulsion request is buffered if it is larger (smaller) than the buffered propulsion request and otherwise no storage takes place, and
- after the interrogation of all the requesting parties the maximum (minimum) propulsion request is buffered and passed on.

5. Prioritization method according to one of the preceding claims, **characterized in that** in the case of certain requesting parties, for example requesting parties which actuate an engine and a brake, the minimum (maximum) propulsion request is selected in the case of a specific propulsion request, for example a braking intervention, and otherwise the maximum (minimum) propulsion request is selected.

6. Prioritization method according to one of the preceding claims, **characterized in that** individual requesting parties cause certain other requesting parties not to be taken into account during the determination of the maximum (minimum) propulsion request, for example a requesting party accelerator pedal causes all the requesting parties which bring about braking/deceleration not to be taken into account.

7. Device for carrying out a prioritization method according to one of the preceding claims, **characterized in that** said method is carried out with a computer system with at least one processor and at least one memory for control, having a software architecture with the following elements or components:
- an operation system and specific services with operating system and specific services as a basis for all other elements and applications,
- a basic functionality for implementing universal requests,
- a layer for coordinating tasks for basic functionalities of the basic functionality and for integrating plug-ins,
- at least one plug-in for implementing specific tasks or functions which go beyond the basic functionality and are coordinated by the layer, wherein the plug-ins are, in particular, interchangeable in a modular fashion.

8. Device according to Claim 7, **characterized in that** open interfaces which can be accessed from the outside and/or closed interfaces (encapsulated interfaces) which are not enabled from the outside are integrated in the software architecture.

9. Device according to Claim 7 or 8, **characterized in that** for example an ACC (Adaptive Cruise Control) request, a drivers demand (comfort/sport), driveability or shift strategy (comfort/sport) are used as plug-ins.

10. Device according to one of Claims 7 to 9, **characterized in that** the layer comprises the following coordinators: the vehicle coordinator, the vehicle motion coordinator and the power train coordinator, wherein a selection of the plug-ins is carried out in the vehicle motion coordinator.

11. Device according to Claim 10, **characterized in that** each coordinator is connected via interfaces to the plug-ins for communication.

12. Device according to one of Claims 7 to 11, **characterized in that** the layer is connected via interfaces for communication with the basic functionality which contains basic functions which act like sensors or actuators.

13. Device according to one of Claims 7 to 12, **characterized in that** the prioritization method can be adapted in a flexible fashion to different vehicle and control device configurations by virtue of the modular interchangeability of the plug-ins, and functions can be easily implemented, wherein requests of various systems are input centrally in a uniform fashion on the basis of system reference variables, for example transmission output torque.

14. Computer program having program code means for carrying out all the steps of a method according to one of Claims 1 to 6 when the computer program is executed on a computer or a corresponding computing unit.

15. Computer program product having program code means which are stored on a readable data carrier in order to carry out a method according to one of Claims 1 to 6 when the computer program is run on a computer or a corresponding computing unit.

16. Control system for a vehicle which is configured to carry out a prioritization method according to one of Claims 1 to 6.

## Revendications

1. Procédé de priorisation de demandeurs ou de plug-ins, en particulier pour la commande coordonnée du train d'entraînement d'un véhicule automobile, et dans lequel, dans une première étape :
une première liste de demandeurs ou de plug-ins est triée par ordre montant ou descendant selon le degré de priorité,
la première liste triée est traitée séquentiellement en commençant avec le demandeur ou plug-in qui présente la plus haute priorité,
le traitement de la première liste est interrompu dès qu'un demandeur ou plug-in contient un souhait d'avancement pour sélectionner ce souhait d'avancement, les autres demandeurs ou plug-ins non encore interrogés n'étant pas pris en compte,
**caractérisé en ce que**
dans une deuxième étape, le traitement d'une deuxième liste de demandeurs ou de plug-ins est commencé si aucun demandeur ou plug-in de la première liste ne contient un souhait d'avancement,
**en ce que** tous les demandeurs ou plug-ins de la deuxième liste de demandeurs ou de plug-ins sont traités dans en succession quelconque, par exemple séquentiellement et
**en ce que** dans la deuxième étape, le souhait d'avancement qui présente le souhait d'avancement maximum ou minimum est déterminé parmi les souhaits d'avancement des demandeurs ou plug-ins de la deuxième liste ou
**en ce que** le souhait d'avancement moyen des demandeurs ou plug-ins de la deuxième liste est déterminé.

2. Procédé de priorisation selon la revendication 1, **caractérisé en ce que** différentes listes sont traitées pour permettre une adaptation à des critères globaux d'optimisation, par exemple un réglage économique, un réglage sportif ou la détection des conditions hivernales.

3. Procédé de priorisation selon l'une des revendications 1 ou 2, **caractérisé en ce que** chaque demandeur ou plug-in est caractérisé de manière claire par une identité, de préférence sous la forme d'un nombre, et par sa position dans les différentes listes en vue de son traitement.

4. Procédé de priorisation selon l'une des revendications précédentes, **caractérisé en ce que** pour la détermination du souhait d'avancement maximum (minimum) :
le premier souhait d'avancement demandé est conservé temporairement,
chaque souhait d'avancement demandé est comparé au souhait d'avancement conservé temporairement pour vérifier s'il est plus grand (plus petit) que le souhait d'avancement conservé temporairement,
le souhait d'avancement demandé est conservé temporairement au cas où il est plus grand (plus petit) que le souhait d'avancement conservé temporairement, sinon il n'est pas conservé,
après l'interrogation de tous les demandeurs, le souhait d'avancement maximum (minimum) est conservé temporairement et transmis.

5. Procédé de priorisation selon l'une des revendications précédentes, **caractérisé en ce qu'**en cas de souhait d'avancement défini de demandeurs définis, par exemple des demandeurs qui commandent un moteur et un frein, par exemple pour une intervention de freinage, le souhait d'avancement minium (maximum) est sélectionné, sinon, c'est le souhait d'avancement maximum (minimum) qui l'est.

6. Procédé de priorisation selon l'une des revendications précédentes, **caractérisé en ce que** certains demandeurs ont pour effet que certains autres demandeurs ne sont pas pris en compte dans la détermination du souhait d'avancement maximum (minimum), par exemple un demandeur pédale de frein a pour effet que tous les demandeurs qui ont pour effet un freinage/ralentissement ne sont pas pris en compte.

7. Dispositif en vue de l'exécution d'un procédé de priorisation selon l'une des revendications précédentes, **caractérisé en ce qu'**il est exécuté par un système informatique qui comprend au moins un processeur et au moins une mémoire de commande et présente une architecture logicielle dotée des éléments ou composants suivants :
un système opérationnel et des services spécifiques avec système d'exploitation et services spécifiques à la base de tous les autres éléments et applications,
une fonctionnalité de base permettant de convertir des demandes universelles,
une couche de coordination de tâches des fonctionnalités de base, permettant l'incorporation de plug-ins,
au moins un plug-in de conversion de tâches ou fonctions concrètes qui débordent de la fonctionnalité de base et qui sont coordonnées par la couche, les plug-ins pouvant en particulier être remplacés modulairement.

8. Dispositif selon la revendication 7, **caractérisé en ce que** des interfaces ouvertes dans l'architecture logicielle ("open interfaces") peuvent être accédées de l'extérieur et/ou **en ce que** des interfaces intégrées (incapsulated interfaces") qui ne peuvent être libérées de l'extérieur sont intégrées.

9. Dispositif selon les revendications 7 ou 8, **caractérisé en ce qu'**une demande ACC (adaptive cruise control - régulation de vitesse adaptative), une demande du conducteur (confort/sport), une stratégie de roulage ou de rapports de transmission (confort/sport) sont utilisées comme plug-ins.

10. Dispositif selon l'une des revendications 7 à 9, **caractérisé en ce que** la couche comporte les coordinateurs, coordinateurs de véhicule, coordinateurs de déplacement du véhicule et coordinateurs de train d'entraînement, une sélection des plug-ins étant réalisée dans le coordinateur de déplacement du véhicule.

11. Dispositif selon la revendication 10, **caractérisé en ce que** chaque coordinateur est raccordé aux plug-ins par des interfaces permettant la communication.

12. Dispositif selon l'une des revendications 7 à 11, **caractérisé en ce que** la couche est raccordée par des interfaces de communication à la fonctionnalité de base qui contient des fonctions de base qui agissent comme détecteurs ou comme actionneurs.

13. Dispositif selon l'une des revendications 7 à 12, **caractérisé en ce que** la possibilité de remplacer modulairement les plug-ins permet d'adapter de manière flexible le procédé de priorisation à différentes configurations de véhicule et d'appareils de commande et de mettre en oeuvre de manière simple des fonctions, des requêtes de différents systèmes étant introduites centralement de manière unitaire sur la base de grandeurs de guidage du système, par exemple le couple de sortie de la transmission.

14. Programme informatique présentant des moyens de code de programme permettant de mettre en oeuvre toutes les étapes d'un procédé selon l'une des revendications 1 à 6 lorsque le programme informatique est exécuté sur un ordinateur ou sur une unité de calcul appropriée.

15. Programme informatique présentant des moyens de code de programme conservés en mémoire sur un support de données lisible, pour mettre en oeuvre toutes les étapes d'un procédé selon l'une des revendications 1 à 6 lorsque le programme informatique est exécuté sur un ordinateur ou sur une unité de calculateur appropriée.

16. Système de commande pour véhicule, conçu pour mettre en oeuvre un procédé de priorisation selon l'une des revendications 1 à 6.
